# EUROPEAN PATENT APPLICATION

(11) **EP 1 992 832 A2**
(43) Date of publication of application: **19.11.2008**
(21) Application number: 08155678.9
(22) Date of filing: 06.05.2008
(51) Int. Cl.: F16D 65/09

(54) **Shoe-hold spring for drum brake device**

(30) Priority: 11.05.2007 JP 2007126621
(71) Applicant: Nisshinbo Industries, Inc., Chuo-ku, Tokyo 103-8650 (JP)
(72) Inventor: IKEDA, Takashi, Gunma-ken (JP)
(74) Representative: Bentz, Jean-Paul

(57) **Abstract**

The invention provides a shoe-holding structure for a drum brake device, which can be manufactured easily, is high quality and can prevent the settling thereof. The shoe-hold spring (1) to be used in the shoe-holding structure comprises a first arm (11) with an interspace (14), a second arm (12) which engages the end of a shoe-hold pin (2), and an arc-shaped spring portion (13) that joints the first arm and the second arm, in which the second arm is formed to approach the first arm, the width of the second arm is narrower than the width of the interspace of the first arm, and the second arm, when the second arm is depressed, is able to be resiliently deformed to pass through the interspace of the first arm.

## Description

### Field of the Invention

This invention relates to a shoe-hold spring for a drum brake device.

### Background of Technology

In conventional drum brake devices, a brake shoe, which frictionally engages a sliding surface of the brake drum, is resiliently mounted on a back plate that is fixed on a stationary part of a vehicle by a shoe-holding structure.

The shoe-holding structure described in the Patent Document 1 (US Patent No. 5540310) is comprised of a shoe-hold spring, which is a leaf spring having approximately parallel arms and an arc-shaped spring portion, and a bar-like shaped shoe-hold pin.
The shoe-hold pin has a tablet-like hooking portion at one end of a columnar main stem and has a hemispherical expanded head at the other end of the main stem.

The shoe-hold spring made from steel strip for leaf springs is comprised of a first arm to be mounted on a shoe web of the brake shoe, a second arm facing the first arm, and an arc-shaped spring portion jointing both first and second arms.
Slits formed at free ends of both arms allow the main stem of the shoe-hold pin to pass therethrough, and the second arm has a concave portion at a very end of the slit to retain the hooking portion of the shoe-hold pin.
Furthermore, both arms have bending portions at ends thereof that approach each other, and the bending portions interfere each other to prevent over-deflection of the arms.

The shoe-hold springs, which are described in the Patent Document 2 (Japanese Unexamined Patent Publication No. 2001-295872) and the Patent Document 3 (US Patent No. 6062354), do not have the bending portions described in the Patent Document 1. Arms of the shoe-hold spring are positioned so as to be relatively close to each other, thereby preventing over-deflection of the arms.
These shoe-hold springs are manufactured by stamping (making) a blank from steel strip for leaf springs and by bending the blank.
The shoe-hold spring is comprised of two arms and the arc-shaped spring portion and is in almost P-shape.
These shoe-hold springs can be deformed until the two arms superpose each other but are not capable of further deforming.
Therefore, spring-back during the forming process disturbs the dimensional accuracy of the shoe-hold spring.
Also, when presetting for preventing the settling after the forming process, a high stress equal to or more than the maximum working stress cannot be loaded, which leaves an initial settling problem.

[Patent Document 1] US Patent No. 5540310
[Patent Document 2] Japanese Unexamined Patent Publication No. 2001-295872
[Patent Document 3] US Patent No. 6062354

The above-described conventional shoe-hold springs have the problems of unstable dimensional accuracy during the forming process and the spring deformation due to the initial load, i.e., the initial settling, because of insufficient presetting.

The present invention was made to resolve the above-identified problems, and an object is to present a shoe-holding structure for a drum brake device utilizing a shoe-hold spring which offers an easy shoe-hold spring manufacturing process and provides a high quality shoe-hold spring without the settling problem.
Here, the "settling" of the spring can be prevented by presetting as loading the high stress equal to or more than the maximum working stress at the final process of manufacturing the spring after the forming and heat-treatment.

### [Means to Resolve the Problems]

### Summary of the Invention

This invention is:
<1> a shoe-hold spring for a drum brake device, comprising a first arm which is to be mounted on a shoe web of a brake shoe and has an interspace at one end thereof, a second arm which engages a shoe-hold pin, and an arc-shaped spring portion jointing the first arm and the second arm, characterized in that the second arm is configured to approach the first arm, and width of the second arm is narrower than width of the interspace of the first arm so that the second arm, when the second arm is depressed, is able to be resiliently deformed to pass through the interspace of the first arm;
<2> the shoe-hold spring according to <1>, wherein the second arm is approximately parallel to the first arm;
<3> the shoe-hold spring according to <1> and <2>, wherein the second arm has a slit which is formed from an end thereof and an opening formed continuously thereto;
<4> the shoe-hold spring according to <1> - <2>, wherein the second arm has a slit which is formed from an end thereof and a U-shaped groove perpendicular to the slit.

The shoe-hold spring are structured as explained above, thereby providing advantages as described below.
The shoe-hold spring of the present invention is used for the shoe-holding structure for the drum brake device, which can be manufactured easily, is high quality, and can prevents the settling problem.
Also, when stamping (making) the blank from steel strip for leaf springs to shape the shoe-hold spring, a remaining portion of the steel strip after stamping (making) the first arm can be used to shape the second arm, which eliminates material waste.

### Brief Description of the Drawings

FIG. 1 is a cross section view of the shoe-holding structure of the drum brake device using the shoe-hold spring relating to the first embodiment of the present invention and surroundings thereof;

FIG. 2 (a) is a perspective view of the shoe-hold spring relating to the first embodiment of this invention;
FIG. 2 (b) is a side view of the shoe-hold spring;

FIG. 3 (a) is a perspective view of the shoe-hold spring relating to the first embodiment of this invention at the bending process of the same;

FIG. 3 (b) is a cross section view of the shoe-hold spring at the bending process of the same;

FIG. 4 is a cross section view of the shoe-holding structure of the drum brake device using the shoe-hold spring relating to the second embodiment of the present invention and surroundings thereof;
FIG. 4 (b) is a perspective view of the shoe-hold spring;

FIG. 5 is a perspective view of the shoe-hold spring relating to the second embodiment of this invention; and

FIG. 6 is a schematic view of the process to stamp (make) a blank from steel strip for leaf springs when manufacturing the shoe-hold spring.

### Preferred Embodiments of the Invention

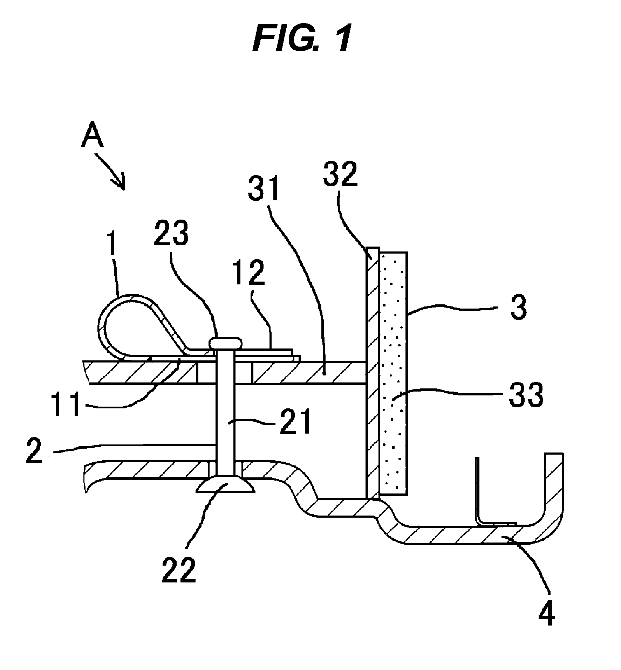

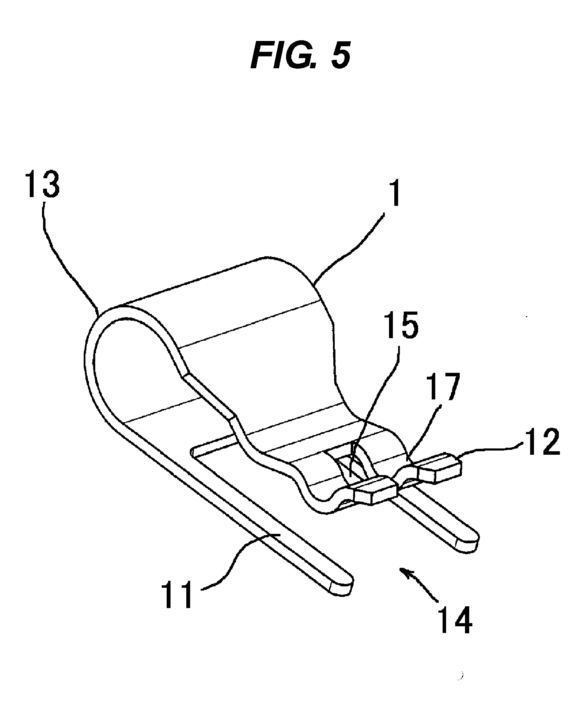

In the present invention, regarding the shoe-hold spring, which has the first arm and the second arm and is mounted on the shoe web of the brake shoe, the width of the second arm is narrower than the width of the interspace of the first arm, and therefore the first arm and the second arm do not interfere each other when in the bending process.
Embodiments of the present invention are explained with reference to FIGS. 1 - 5.

### First Embodiment

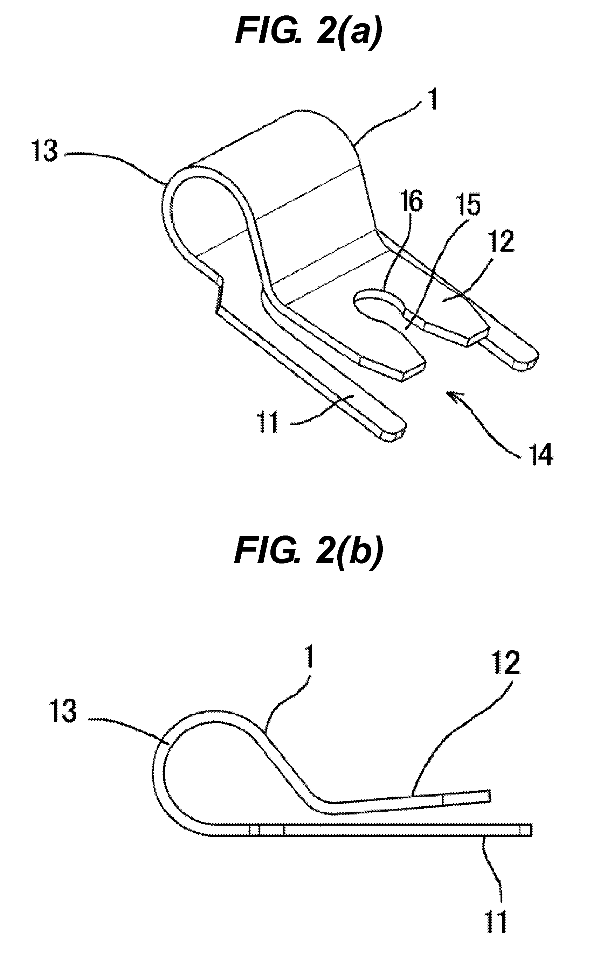

FIG. 1 is a cross section view of the shoe-holding structure A of the drum brake device using the shoe-hold spring 1 of the first embodiment of the present invention and surroundings thereof.
Also, FIG. 2(a) is a perspective view of the shoe-hold spring 1, and FIG. 2 (b) is a side view of the shoe-hold spring 1.
A brake shoe 3 is movably mounted on an internal surface of a back plate 4 that is fixed to a stationary part of a vehicle, not shown in the figures, and the brake shoe 3 is assembled as connecting a curved shoe rim 32 to a periphery of a semi-circular shoe web 31 to make T-shape in cross section and fixing a lining 33 on a peripheral surface of the shoe rim 32.
An intermediate portion of the shoe web 31 of the brake shoe 3 is resiliently mounted by the shoe-holding structure A, and a frictional surface of a lining 33 is constantly aligned relative to a sliding surface of a brake drum which is not shown in the figures.

The shoe-holding structure A is comprised of the shoe-hold spring 1 and a bar-like shoe-hold pin 2.
The shoe-hold pin 2 projects at a side of a brake shoe 3 through a hole of the back plate 4 and penetrates a hole of the shoe web 31.
The hole of the shoe web 31 is formed in an oblong or the like so as to prevent interfering the shoe-hold pin 2 when the lining 33 is worn out.
The shoe-hold pin 2 has a stem 21, a head 22 on one side of the stem 21 at the side of the back plate 4, and a hooking portion 23 on the other side of the stem 21 at the side of the shoe web 31, which is engaging a circular hole 16 of a second arm 12 of the shoe-hold spring 1.
A shape of the circular hole 16 matches a shape of the hooking portion 23 of the shoe-hold pin 2 so as to have a structure that no disengagement therebetween occurs due to a movement of the brake shoe in a moving direction.

The shoe-hold spring 1 as shown in FIG. 2 is formed by stamping (making) a blank from flat steel strip for leaf springs in an appropriate shape and by bending the blank.
The shoe-hold spring 1 is comprised of a first arm 11, the second arm 12, and an arc-shaped spring portion 13 and is approximately in P-shape.
The first arm 11 has an interspace 14, and width of the second arm 12 is designed narrower than width of the interspace 14.

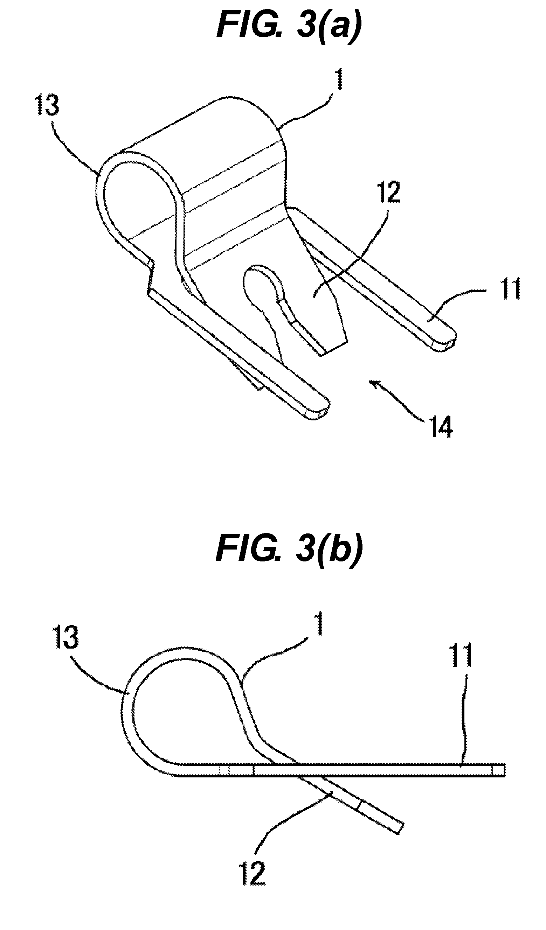

FIG. 3 (a) is a perspective view of the shoe-hold spring 1 on bending process of the same.
FIG. 3(b) is a side view of the shoe-hold spring 1 on bending process of the same.
This shoe-hold spring 1, as described above, is formed by stamping (making) the blank from steel strip for leaf springs and by bending the blank.
The conventional shoe-hold springs can only bend up to the point where the first arm and the second arm interfere each other; however, in the present invention, the width of the second arm 12 of the shoe-hold spring 1 is designed narrower than the width of the interspace 14 of the first arm 11, and therefore the second arm 12 can be deformed to pass through the interspace 14 and then the second arm 12 can be deformed until the second arm 12 contact with a very end of the interspace 14 through the first arm 11.

Accordingly, when forming the shoe-hold spring 1, the present invention can prevent the situation where the spring back disturbs the desirable formation, thereby facilitating the forming process and improving the stability of dimensional accuracy of the product.

Furthermore, when setting the spring at the final process after the forming process and heat-treatment, an equal or higher stress than the maximum working stress can be easily loaded, which prevents the settling of the shoe-hold spring.

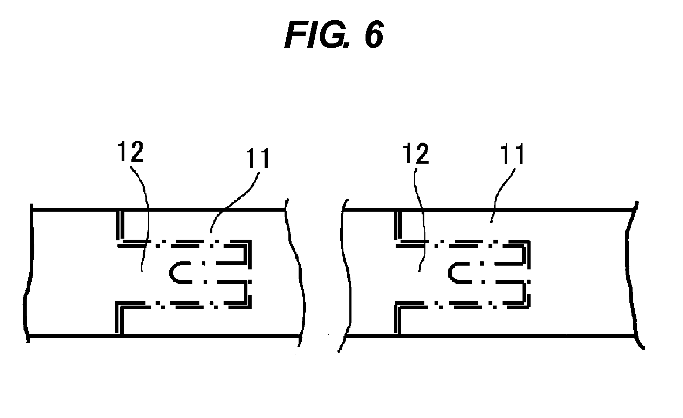

Also, as shown in FIG. 6, consumption of steel strip leaf spring is minimized, when stamping (making) the blank from steel strip for leaf springs, for example, by using a remaining portion, i.e., the interspace 14 of the first arm 11 of the first product, to stamp (make) the second arm 12 of the next product.
The methods of stamping (making) a blank from steel strip for leaf springs are such as by separating in desirable shapes by a blanking press or by a laser cutting apparatus.

### Second Embodiment

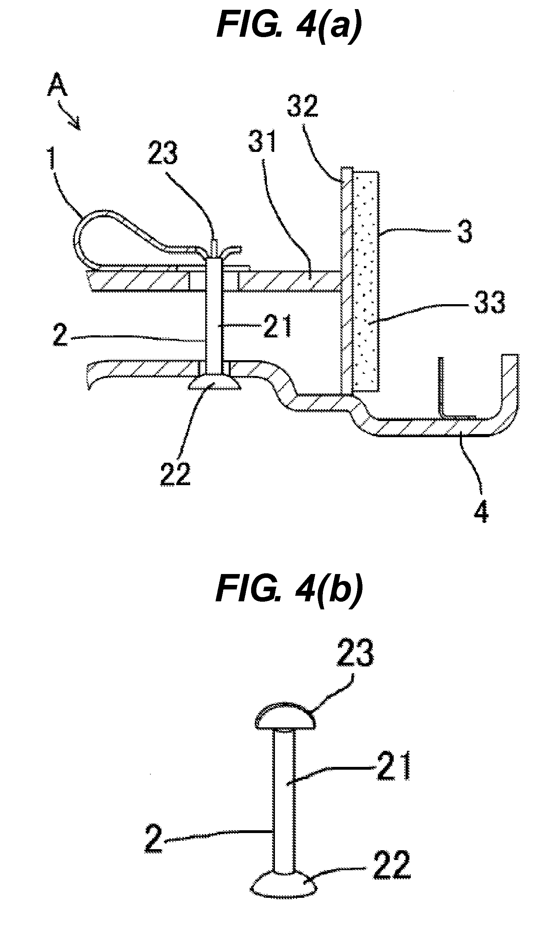

FIG. 4 is a cross section view of a shoe-holding structure A of a drum brake device using a shoe-hold spring 1 of a second embodiment of the present invention and surroundings thereof.
A hooking portion 23 of the shoe-hold pin 2 has a larger diameter than a diameter of the stem 21 and is formed in a flat fan-like shape.

FIG.. 5 is a perspective view of the shoe-hold spring 1 of the second embodiment.
A second arm 12 has a hooking slit 15 which is formed from an end thereof and a U-shaped groove 17 having a bottom surface in an orthogonal direction to the hooking groove 15 around an intermediate portion thereof.

When installing the shoe-hold spring 1 of this type, the shoe-hold pin 2 is inserted into and penetrates through the holes of the back plate 4 and the shoe web 31.
Then, as adjusting directions of a plate surface of the flat hooking portion 23 and the hooking slit 15, the hooking portion 23 of the shoe-hold pin 2 and the U-shaped groove 17 are moved and adjusted to approximately in collinear positions.
After this adjusting process, the shoe-hold pin 2 is turned approximately 90 degree as depressing the shoe-hold spring 1, and the plated hooking portion 23 of the shoe-hold pin 2 and the U-shaped groove 17 are adjusted to approximately make a vertical alignment.
Here, if the pressure on the shoe-hold spring 1 is released, the flat hooking portion 23 sits in a pocket of the U-shaped groove 17 to stop rotation of the shoe-hold pin 2, which prevents the shoe-hold pin 2 to be disengaged therefrom.
In addition, the pocket of the U-shaped groove 17 can be shallow as long as the shape is to stop the rotation of the shoe-hold pin 2.

The shoe-hold spring 1 of the present invention can be deformed so that the second arm 12 passes through the interspace 14 of the first arm 11 when manufacturing the shoe-hold spring 1. Therefore the same advantages as in first embodiment can be achieved.

## Claims

1. A shoe-hold spring (1) for a drum brake device, comprising
a first arm (11) which is to be mounted on a shoe web (31) of a brake shoe (3) and has an interspace (14) at one end thereof,
a second arm (12) which engages a shoe-hold pin (2), and
an arc-shaped spring portion (13) jointing the first arm and the second arm, **characterized in that**
the second arm is configured to approach the first arm, and width of the second arm is narrower than width of the interspace of the first arm so that the second arm, when the second arm is depressed, is able to be resiliently deformed to pass through the interspace of the first arm.

2. The shoe-hold spring according to Claim 1, **characterized in that**
the second arm is approximately parallel to the first arm.

3. The shoe-hold spring according to Claims 1-2, **characterized in that**
the second arm has a slit (15) which is formed from an end thereof and an opening (16) formed continuously thereto.

4. The shoe-hold spring according to Claims 1-2, **characterized in that**
the second arm has a slit which is formed from an end thereof and a U-shaped groove (17) perpendicular to the slit.
